# EUROPEAN PATENT APPLICATION

(11) **EP 1 628 473 A2**
(43) Date of publication of application: **22.02.2006**
(21) Application number: 04257727.0
(22) Date of filing: 13.12.2004
(51) Int. Cl.: H04N 5/232, H04N 5/225

(54) **Electronic communication apparatus capable of switching focusing mode**

(30) Priority: 19.08.2004 JP 2004239936
(71) Applicant: FUJITSU LIMITED, Kawasaki-shi, Kanagawa 211-8588 (JP)
(72) Inventor: Miyazaki, Kiyoshi, Fujitsu Limited, Kawasaki-shi, Kanagawa 211-8588 (JP)
(74) Representative: Mohun, Stephen John

(57) **Abstract**

A lens has a first movable range and a second movable range different from the first movable range in an electronic apparatus. A receiving element receives a wave transmitted from a transmitting element. A controller circuit is designed to shift the lens from a lens position within the first movable range to a lens position within the second movable range when the receiving element receives the wave reflecting from an object. The electronic apparatus enables movement of the lens based on the wave reflecting from an object. If different focusing modes are set to the first and second movable ranges, the focusing modes can be switched over with a simple structure. The focus can be established in a facilitated manner. A user can be released from burdensome operations to switch over the focusing modes.

## Description

### BACKGROUND OF THE INVENTION

### Field of the Invention:

The present invention relates to an electronic apparatus such as a mobile phone terminal, for example. In particular, the present invention relates to an electronic apparatus comprising: a transmitting element designed to transmit a wave based on a transmission signal; and a receiving element designed to output a receiving signal based on reception of the wave.

### Description of the Prior Art:

A so-called digital camera is often incorporated in a mobile phone terminal. A focusing mode of the digital camera is changed over between a normal mode and a close-up mode. The normal mode is usually employed to shoot an object located at a position between 40cm and the infinity from an objective lens, for example. A zoom lens moves within a first movable range in the normal mode. The close-up mode is usually employed to shoot an object located at a position within 30cm from the objective lens, for example. The zoom lens moves within a second movable range adjacent the first movable range in the close-up mode. A user of the mobile phone terminal is forced to manually switching the focusing mode.

The zoom lens is only allowed to move within either one of the first or second movable range in an automatic focusing. The normal mode simply allows movement of the zoom lens within the first movable range even when the user intends to shoot an object located at a position distanced from the objective lens by 10cm. The digital camera goes out of focus. Unless the user manually selects the close-up mode, a focused image cannot be obtained.

### SUMMARY OF THE INVENTION

It is accordingly an object of the present invention to provide an electronic apparatus capable of switching a focusing mode with a relatively simple structure. It is accordingly an object of the present invention to provide a method and a software program greatly useful to realize the aforementioned electronic apparatus.

According to a first aspect of the present invention, there is provided an electronic apparatus comprising: a lens having a first movable range and a second movable range different from the first movable range; a transmitting element designed to transmit a wave; a receiving element designed to receive the wave; and a controller circuit designed to shift the lens from a lens position within the first movable range to a lens position within the second movable range when the receiving element receives the wave reflecting from an object.

The electronic apparatus enables movement of the lens based on the wave reflecting from an object. The transmitting element and the receiving element may be utilized to receive the wave. If different focusingmodes are set to the first and second movable ranges, the focusing modes can be switched over with a simple structure. The focus can be established in a facilitatedmanner. A user can be released from burdensome operations to switch over the focusing modes. Here, the first and second movable ranges may overlap each other, or be defined completely separately.

The transmitting element may transmit the wave within a predetermined directional range based on a transmission signal. The receiving element may be located within the directional range of the wave so as to output a receiving signal based on reception of the wave. In this case, the electronic apparatus may further comprise a detection circuit designed to detect the wave reflecting from the object based on the transmission signal and the receiving signal.

The receiving element is located within the directional range of the wave in the electronic apparatus. The receiving element is thus allowed to directly receive the wave transmitted from the transmitting element. The wave reflecting from the object is received later by a predetermined period after the receiving element has directly received the wave from the transmitting element. A delay or time difference is detected at the detection circuit. The difference can be utilized to detect the wave reflecting from the object.

The electronic apparatus may comprise an objective lens having an optical axis aligned with that of the lens. In this case, the second movable range may be defined to extend rearward from the objective lens along the optical axis. Additionally, the first movable range may be defined at the rear of the second movable range along the optical axis. The lens is allowed to move within the first movable range in a normal mode. The lens is allowed to move within the second movable range in a close-up mode.

The aforementioned electronic apparatus may employ an infrared radiation as the wave. The electronic apparatus may further comprise a controller circuit designed to establish data communications based on the transmitting and receiving elements. The transmitting and receiving elements can thus be utilized to realize data communications in addition to movement of the lens. The applicability of the electronic apparatus can be improved.

A specific controller circuit may be provided to realize the aforementioned electronic apparatus. The controller circuit may be designed to shift a lens from a lens position within a first movable range to a lens position within a second movable range when a receiving element receives a wave reflecting from an object.

According to a second aspect of the present invention, there is provided a method of switching a focusing mode, comprising: causing a transmitting element to transmit a wave based on a transmission signal; detecting a difference between a receiving signal output from a receiving element and the transmission signal; and switching over the focusing mode between a normal mode and a close-up mode based on the difference.

A difference may be detected between the receiving signal and the transmission signal in switching-over the focusing mode. The transmitting and receiving elements are utilized to detect the difference. The focusing mode can be switched over with a simple structure. An infrared radiation may be employed as the wave.

According to a third aspect of the present invention, there is provided computer-readable storage medium containing program instructions for switching a focusing mode, comprising: computer program code causing a processor to cause a transmitting element to transmit a wave based on a transmission signal; computer program code causing a processor to detect a difference between a receiving signal output from a receiving element and the transmission signal; and computer program code causing a processor to switch over the focusing mode between a normal mode and a close-up mode based on the difference. The computer program codes may be installed in an electronic apparatus, for example.

### BRIEF DESCRIPTION OF THE DRAWINGS

The above and other objects, features and advantages of the present invention will become apparent from the following description of the preferred embodiment in conjunction with the accompanying drawings, wherein:
Fig. 1 is a perspective view schematically illustrating the entire structure of a mobile phone terminal as an example of an electronic apparatus;
Fig. 2 is a block diagram schematically illustrating the structure of the mobile phone terminal;
Fig. 3 is a schematic view illustrating a movement range of a zoom lens;
Fig. 4 is a flowchart illustrating an example of the processes of a software program installed in the mobile phone terminal; and
Fig. 5 is a schematic view illustrating the pulse width of signals.

### DESCRIPTION OF THE PREFERRED EMBODIMENT

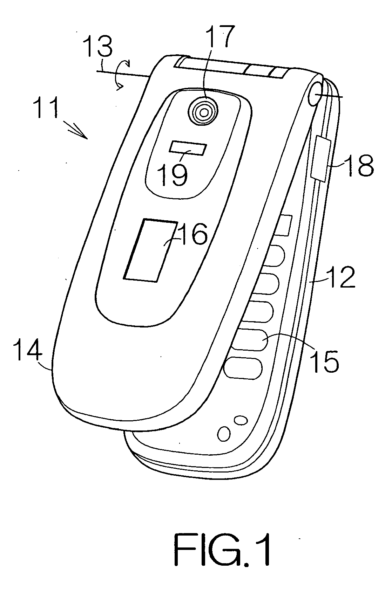

Fig. 1 schematically illustrates a mobile phone terminal 11 as an example of an electronic apparatus according to an embodiment of the present invention. The mobile phone terminal 11 includes an equipment body 12 and a display enclosure 14. The display enclosure 14 is connected to the equipment body 12 for relative swinging movement around a rotation axis 13. Printed circuit boards, not shown, are incorporated in the equipment body 12 and the display enclosure 14. As conventionally known, operating circuits such as a central processing unit (CPU), a memory, and the like, are mounted on the printed circuit board, for example. An operator is allowed to manipulate input devices 15 such as an on-hook keypad, an off-hook keypad, dial keypads, mounted on the equipment body 12 so as to input various data and instructions to the CPU. The operating circuits execute processing operations based on the input data or instructions.

A first liquid crystal display (LCD) panel, not shown, is set in the front surface of the display enclosure 14. The first liquid crystal display panel is designed to define the screen within the front surface of the display enclosure 14. Likewise, a second liquid crystal display (LCD) panel 16 is set in the back surface of the display enclosure 14. The second liquid crystal display panel 16 is designed to define the screen within the back surface of the display enclosure 14.

A camera module 17 is incorporated in the display enclosure 14. The camera module 17 is located on the back surface of the display enclosure 14. The operating circuits are designed to utilize the camera module 17 so as to catch images such as still or moving pictures. A shutter release 18 is utilized to shoot the images. The shutter release 18 is located at the side surface of the equipment body 12. The images shot with the camera module 17 can be displayed on the screens of the first liquid crystal display panel and the second liquid crystal display panel 16.

An infrared communication module 19 is incorporated in the display enclosure 14. The infrared communication module 19 is located at the back surface of the display enclosure 14. The infrared communication module 19 is allowed to establish infrared data communications with other mobile phone terminals or personal computers. The infrared data communications may be established pursuant to a standard such as IrDA (Infrared Data Association), for example.

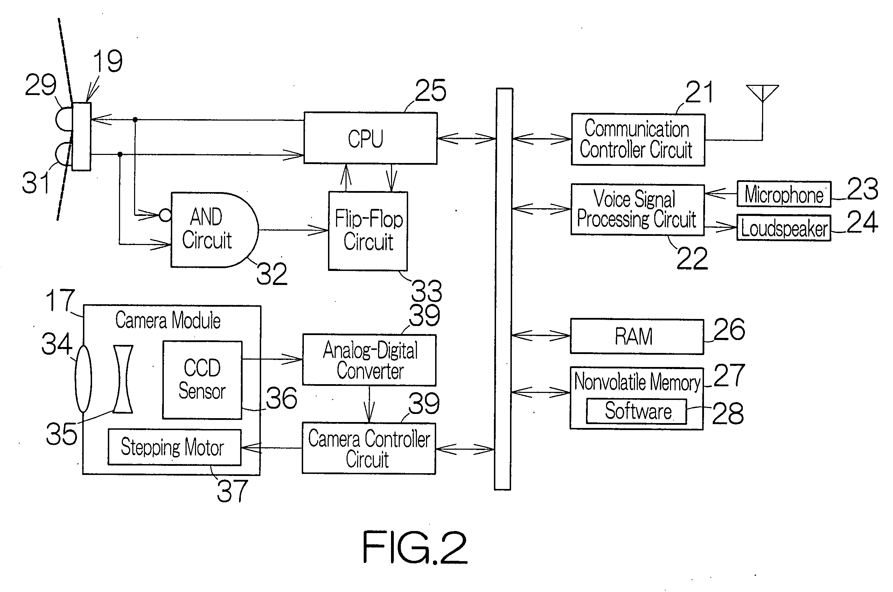

As shown in Fig. 2, a communication controller circuit 21 is incorporated in the mobile phone terminal 11. The communication controller circuit 21 operates to exchange voice and data signals with a base station, not shown. A voice signal processing circuit 22 is connected to the communication controller circuit 21. The voice signal processing circuit 22 generates voice signals based on voice input through a microphone 23, for example. The communication controller circuit 21 serves to transmit the generated voice signals toward the base station. The voice signal processing circuit 22 also causes a loudspeaker 24 to reproduce voice based on the voice signals received from the communication controller circuit 21.

A central processing unit (CPU) 25 is connected to the communication controller circuit 21 in the mobile phone terminal 11. A random access memory (RAM) 26 and a nonvolatile memory 27 are connected to the central processing unit 25. The nonvolatile memory 27 may be a flash memory, for example. The nonvolatile memory 27 holds therein software programs 28 related to various functions of the mobile phone terminal 11. The central processing unit 25 is allowed to execute the processings in accordance with the software programs 28 temporarily stored in the random access memory 26, for example. The software programs 28 will be described later in detail.

The aforementioned infrared communication module 19 is connected to the central processing unit 25 in the mobile phone terminal 11. The infrared communication module 19 includes a transmitting element or light-emitting element 29 and a receiving element or light-receiving element 31. The light-emitting element 29 is designed to transmit a wave or infrared radiation within a predetermined directional range based on the transmission signal supplied from the central processing unit 25. The light-receiving element 31 is designed to output a receiving signal in response to reception of the infrared radiation. The light-emitting element 29 and the light-receiving element 31 are located side by side on a predetermined plane. The light-receiving element 31 is thus located within the directional range of the infrared radiation. The directional range of the infrared radiation may extend over 180 degrees approximately. A transmission range of the infrared communication module 19 may extend within 30cm approximately.

A detection circuit or AND circuit 32 is connected to the infrared communication module 19. The AND circuit 32 operates to detect a wave or infrared radiation reflecting from an object. The AND circuit 32 is allowed to receive the transmission signal transferred from the central processing unit 25. The transmission signal is inverted prior to input to the AND circuit 32. Likewise, the AND circuit 32 is allowed to receive the receiving signal transferred from the light-receiving element 31. The AND circuit 32 is designed to calculate a difference between the transmission signal and the receiving signal. The difference is output as a detection signal. The difference serves to represent the reflected wave. The calculation of the difference will be described later in detail. Here, the light-emitting element 29, the light-receiving element 31 and the AND circuit 32 comprises a transmitting/receiving module according to the present invention.

A flip-flop circuit 33 is connected to the AND circuit 32. The flip-flop circuit 33 is designed to output an interrupting signal through an output terminal toward the central processing unit 25 when the detection signal is input from an input terminal. The flip-flop circuit 33 keeps the output of the interrupting signal. When the central processing unit 25 recognizes the interrupting signal, a reset signal is output from the central processing unit 25 to the flip-flop circuit 33. The flip-flop circuit 33 terminates the output of the interrupting signal in response to reception of the reset signal. The central processing unit 25 is thus allowed to reliably recognize the interrupting signal. It should be noted that the flip-flop circuit 33 needs not keep outputting the interrupting signal as long as the interrupting signal can be held in the central processing unit 25.

The aforementioned camera module 17 is connected to the central processing unit 25. The camera module 17 includes an objective lens 34, a zoom lens 35 located at the rear of the objective lens 34 and a charge-coupled device (CCD) sensor 36 located at the rear of the zoom lens 35. The optical axis of the zoom lens 35 is aligned with the optical axis of the objective lens 34. The optical axis of the objective lens 34 and the zoom lens 35 is set orthogonal to the plane where the light-emitting and light-receiving element 29, 31 are located. The zoom lens 35 is allowed to move forward and backward relative to the objective lens 34 along the optical axis. The rotation of a stepping motor 37 serves to drive the objective lens 34.

An analog-digital converter (ADC) 38 is connected to the CCD sensor 36. The analog-digital converter 38 is designed to convert analog signals, output from the CCD sensor 36, to digital signals. The digital signals are supplied to a camera controller circuit 39. The camera controller circuit 39 operates to generate image data based on the digital signals. The camera controller circuit 39 operates to display images on the screen of the first liquid crystal display panel or the second liquid crystal display panel 16 based on the generated image data. The generated image data may temporarily be stored in the RAM 27.

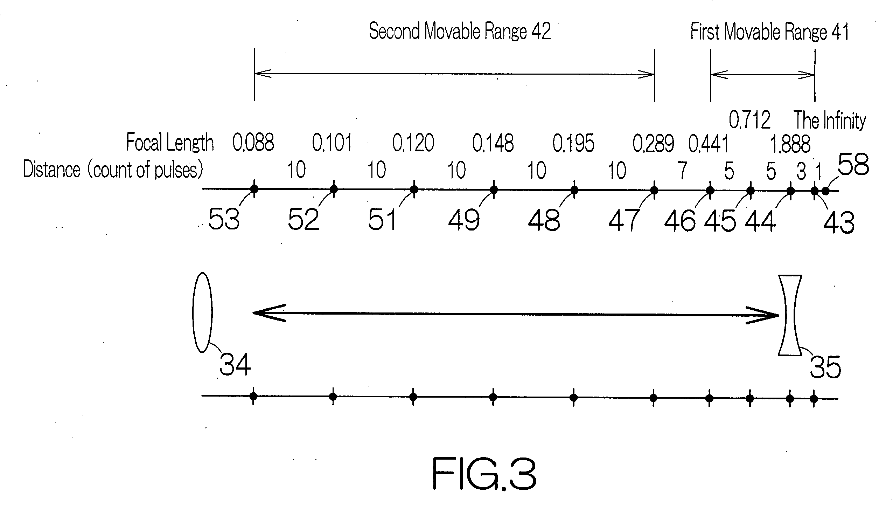

As shown in Fig. 3, the zoom lens 35 has a first movable range 41 and a second movable range 42 different from the first movable range 41. Specifically, the movement range of the zoom lens 35 is switched over between the first and second movable ranges 41, 42. The second movable range 42 is defined to extend rearward from the objective lens 34 along the optical axis. The first movable range 41 is defined to extend at the rear of the second movable range 42 along the optical axis. Here, the first and second movable ranges 41, 42 may overlap each other.

The zoom lens 35 is allowed to move within the first movable range 41 in a normal mode. The first movable range 41 includes first to fourth lens positions 43-46. The first lens position 43 is set to establish the focal length of the infinity. The second lens position 44 is set to establish the focal length of 1.888m. The third lens position 44 is set to establish the focal length of 0.712m. The fourth lens position 46 is set to establish the focal length of 0.441m. Here, the second lens position 44 corresponds to the original position where the zoom lens 35 is positioned when the camera module 17 is booted.

On the other hand, the zoom lens 35 is allowed to move within the second movable range 42 in a close-up mode. The second movable range 42 includes fifth to tenth lens positions 47-53. The fifth lens position 47 is set to establish the focal length of 0. 289m. The sixth to tenth lens positions 48-53 are likewise set to establish the focal length of 0.195m, 0.148m, 0.120m, 0.101m and 0.088m, respectively. Here, the zoom lens 35 is designed to start moving from the fifth lens position 47 in the close-up mode.

As described above, the rotation of the stepping motor 37 serves to drive the zoom lens 35. The stepping motor 37 is allowed to rotate based on a control signal output from the camera controller circuit 39. The stepping motor 37 is designed to rotate by a predetermined angle at every single pulse contained in the control signal. The rotation angle or count of pulse is allocated to the individual lens position over the first and second movable ranges 41, 42. Seventy pulses are counted between the first lens position 43 and the tenth lens position 53.

An origin 58 is defined at a location backward by a single pulse from the first lens position 43. A single pulse is counted between the first lens position 43 and the origin 58. Three pulses are counted between the second and first lens positions 44, 43. Five pulses are counted between the third and second lens positions 45, 44. Five pulses are counted between the fourth and third lens positions 46, 45. Seven pulses are counted between the fifth and fourth lens positions 47, 46. Ten pulses are counted between each of the adjacent pairs of the fifth to tenth lens positions 47-53.

A so-called automatic focusing is utilized in this camera module 17. When the shutter release 18 is half pressed down in the normal mode, for example, the zoom lens 35 at the second lens position 44 serves to form an image on the CCD sensor 36. The analog signal corresponding to the image is output to the analog-digital converter 38. The analog signal is converted to the digital signal after amplification at the analog-digital converter 38. The digital signal is then supplied to the camera controller circuit 39. The camera controller circuit 39 analyzes the waveform of the digital signal.

The zoom lens 35 is then moved to the third lens position 45 in accordance with the rotation of the stepping motor 37. The camera controller circuit 39 analyzes the waveform of the digital signal in the same manner as described above. The waveform of the digital signal is likewise analyzed at the fourth lens position 46. The camera controller circuit 39 compares the waveforms one anther. A striking contrast of an image serves to generate a shape waveform. A dull contrast of an image serves to generate a smooth waveform. The camera controller circuit 39 selects a lens position corresponding to the most striking contrast as the focal point. The camera controller circuit 39 outputs a control signal to the stepping motor 37. The stepping motor 37 rotates by a predetermined angle based on the control signal. The zoom lens 35 thus moves to the lens position corresponding to the focal point.

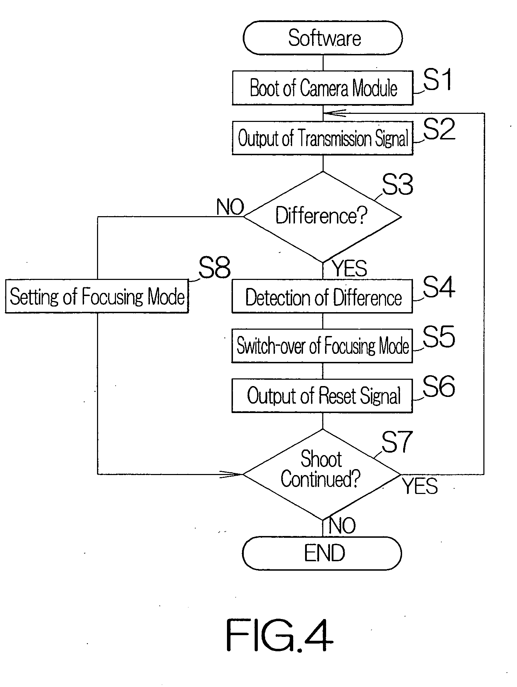

Now, assume that one shoots a still image with the mobile phone terminal 11. Here, an object exists 10cm away from the camera module 17 and the infrared communication module 19. The central processing unit 25 implements the software program 28 stored in the nonvolatile memory 27. As shown in Fig. 4, the central processing unit 25 boots the camera module 17 in response to manipulation of the shutter release 18 at step S1. The central processing unit 25 outputs a boot request signal to the camera controller circuit 39. The camera controller circuit 39 outputs the control signal to the stepping motor 37 in response to reception of the boot request signal. The stepping motor 37 causes the zoom lens 35 to move in accordance with the control signal. The control signal specifies four pulses. The zoom lens 35 thus moves to the original position or second lens position 44.

When the shutter release 18 is subsequently half pressed down, the central processing unit 25 outputs the transmission signal for transmitting a wave or infrared radiation at step S2. The transmission signal is supplied to the light-emitting element 29 of the infrared communication module 19 and the AND circuit 32. The light-emitting element 29 transmits the infrared radiation within the predetermined directional range in response to reception of the transmission signal. The central processing unit 25 monitors whether the AND circuit 32 detects the difference between the receiving signal and the transmission signal at step S3. Since the transmission range of the infrared communication module 19 extends within 30cm approximately, the infrared radiation reflects from the object. This reflected infrared radiation is received at the receiving element 31. In addition, since the receiving element 31 is located within the directional range of the infrared radiation, the infrared radiation is directly received at the light-receiving element 31 from the light-emitting element 29. The light-receiving element 31 thus receives the direct infrared radiation. The light-receiving element 31 outputs the receiving signal corresponding to a combinedwave representing the direct infrared radiation multiplexed on the reflected infrared radiation.

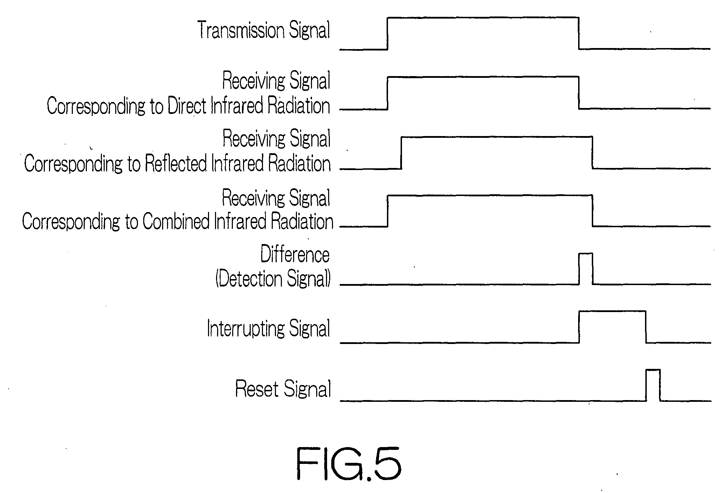

The AND circuit 32 detects the difference between the transmission signal and the receiving signal of the combined infrared radiation. Referring to Fig. 5, the transmission signal, the receiving signal of the direct infrared radiation and the receiving signal of the reflected infrared radiation all have an equal pulse width. The direct infrared radiation is received at the light-receiving element 31 at the same time when the infrared radiation is transmitted. No time difference exists between the receiving signal of the direct infrared radiation and the transmission signal. The receiving signal representing the direct infrared radiation corresponds to the transmission signal. On the other hand, the reflected infrared radiation is received later by a predetermined period at the light-receiving element 31 after the direct infrared radiation has reached the light-receiving element 31. The reception of the receiving signal corresponding to the reflected infrared radiation delays by the predetermined period from the reception of the transmission signal and the receiving signal corresponding to the direct infrared radiation at the AND circuit 32. The AND circuit 32 is allowed to detect a delay or difference based on the inverted transmission signal and the receiving signal corresponding to the combined infrared radiation. The difference or detection signal is supplied to the flip-flop circuit 33. The flip-flop circuit 33 outputs the interrupting signal to the central processing unit 25 based on the detection signal. The processing of the central processing unit 25 then advances to step S4.

The interrupting signal is input to the central processing unit 25. The central processing unit 25 detects the difference between the receiving signal and the transmission signal at step S4. That is to say, the central processing unit 25 recognizes the detection of the reflected infrared radiation. The central processing unit 25 subsequently switches over the shooting mode from the normal mode to the close-up mode in response to the detection of the difference. The central processing unit 25 outputs the drive request signal to the camera controller circuit 39. The camera controller circuit 39 outputs the control signal to the stepping motor 37 in response to reception of the drive request signal. The count of pulses is set at seventeen in the control signal. The steppingmotor 37 rotates by a predetermined angle in accordance with the control signal. The zoom lens 35 thus moves from the second lens position 44 to the fifth lens position 47.

The focal point is set on the object based on the aforementioned automatic focusing in the camera module 17. The camera controller circuit 39 causes the zoom lens 35 to move to any one of the fifth to tenth lens positions 47-53 within the second movable range 42. Here, since the object is located 10cm away from the camera module 17, the zoom lens 35 moves to the ninth lens position 52 from the fifth lens position 47, for example. The pulses should be counted to forty in the control signal.

When the shutter release 18 is completely pressed down, the CCD sensor 36 captures the image. The analog-digital converter 38 converts the analog signal from the CCD sensor 36 to the digital signal. The digital signal is output to the camera controller circuit 39. The camera controller circuit 39 generates image data from the digital signal. The generated image data may be displayed on the screens of the first liquid crystal display panel or the second liquid crystal display panel 16. The generated image data may be stored in the nonvolatile memory 27. At the same time, the central processing unit 25 outputs the reset signal to the flip-flop circuit 33 at step S6. The flip-flop circuit 33 stops outputting the interrupting signal in response to reception of the reset signal.

The central processing unit 25 thereafter monitors whether the shutter release 18 is manipulated or not at step S7. If the shutter release 18 is manipulated, the processing of the central processing unit 25 returns to step S2. The aforementioned processings are repeated. If the user intends to finish using the camera module 17, the central processing unit 25 outputs a shutoff signal to the camera controller circuit 39. The camera controller circuit 39 shuts off the camera module 17 in response to reception of the shutoff signal.

Next, assume that the object is located 70cm away from the camera module 17 and the infrared communication module 19. The central processing unit 25 boots the camera module 17 in response to manipulation of the shutter release 18, for example. The zoom lens 35 first moves to the original position or second lens position 44. Subsequently, when the shutter release 18 is half pressed down, the central processing unit 25 outputs the transmission signal to the light-emitting element 29 of the infrared communication module 19 and the AND circuit 32. The light-emitting element 29 transmits the infrared radiation within the predetermined directional range based on the transmission signal. The central processing circuit 25 monitors whether the AND circuit 32 detects a difference between the receiving signal and the transmission signal.

Since the object is distanced from the camera module 17 and the infrared communication module 19 by more than 30cm, the light-receiving element 31 fails to receive the reflected infrared radiation. The light-receiving element 31 outputs to the AND circuit 32 the receiving signal merely corresponding to the direct infrared radiation. Since the transmission signal and the receiving signal corresponding to the direct infrared radiation both have an equal pulse width, the AND circuit 32 cannot detect a difference between the transmission signal and the receiving signal corresponding to the direct infrared radiation. No detection signal is output to the flip-flop circuit 33 from the AND circuit 32. The processing of the central processing unit 25 advances to step S8.

The central processing unit 25 sets the normal mode in the camera module 17 after a predetermined time has passed from the output of the transmission signal at step S8. The camera module 17 establishes a focus on the object based on the automatic focusing. The camera controller circuit 39 causes the zoom lens 35 to move to any one of the first to fourth lens positions 43-46 corresponding to the focal point within the first movable range 41. Here, since the object is distanced 70cm away from the camera module 17, the zoom lens 35 moves to the third lens position 45. The count of pulses is set at five. The image data is subsequently generated in the same manner as described above.

The central processing unit 25 thereafter monitors whether the shutter release 18 is manipulated or not at step S7. If the shutter release 18 is manipulated, the processing of the central processing unit 25 returns to step S2. The aforementioned processings are repeated. If the user intends to finish using the camera module 17, the central processing unit 25 outputs a shutoff signal to the camera controller circuit 39. The camera controller circuit 39 shuts off the camera module 17 in response to reception of the shutoff signal.

The mobile phone terminal 11 enables infrared data communications utilizing the infrared communication module 19 as described above. The infrared data communications are realized pursuant to the standard IrDA, for example. The central processing unit 25 converts data to a transmission signal. The transmission signal is supplied to the light-emitting element 29. The light-emitting element 29 transmits the infrared radiation to other mobile phone terminal or personal computer based on the transmission signal, for example. The reception is restrained at the light-receiving element 31 during the transmission of the infrared radiation. After the transmission of the infrared radiation has been completed, the light-receiving element 31 is released from the restraint. The light-receiving element 31 is thus allowed to receive an infrared radiation transmitted from the other mobile phone terminal or personal computer. The light-receiving element 31 outputs the receiving signal to the central processing unit 25 in response to reception of the infrared radiation. The central processing unit 25 converts the receiving signal to data. The infrared data communications can be established in this manner.

The mobile phone terminal 11 enables switching-over of the focusing mode in the camera module 17 based on the detection of the reflected infrared radiation derived from the receiving signal and the transmission signal. The light-emitting and light-receiving elements 29, 31 are simply utilized to detect the reflected infrared radiation. The focusing mode can be switched over with a relatively simple structure. The focused image is reliably captured. The user can be released from burdensome operations to switch over the focusing mode.

Moreover, the direct infrared radiation in the infrared communication module 19 is utilized to detect the reflected infrared radiation in the aforementioned manner. The reflected infrared radiation can thus easily be detected with a simple structure. In addition, the infrared communication module 19 also enables infrared data communications as described above. The applicability of the mobile phone terminal 11 can be improved.

It should be noted that the close-up mode may first be set, in place of the normal mode, when the camera module 17 is booted up. Specifically, the shooting mode may be switched over from the close-up mode to the normal mode.

## Claims

1. An electronic apparatus comprising:
a lens having a first movable range and a second movable range different from the first movable range;
a transmitting element designed to transmit a wave;
a receiving element designed to receive the wave; and
a controller circuit designed to shift the lens from a lens position within the first movable range to a lens position within the second movable range when the receiving element receives the wave reflecting from an object.

2. The electronic apparatus according to claim 1, wherein said transmitting element transmits said wave over a predetermined directional range based on a transmission signal, said receiving element located within the directional range of said wave so as to output a receiving signal based on reception of said wave, and the electronic apparatus further comprising a detection circuit designed to detect the wave reflecting from the object based on the transmission signal and the receiving signal.

3. The electronic apparatus according to claim 2, further comprising an objective lens having an optical axis aligned with that of said lens, wherein said second movable range is defined to extend rearward from the objective lens along the optical axis, said first movable range defined at the rear of the second movable range along the optical axis.

4. The electronic apparatus according to claim 2, wherein said wave is an infrared.

5. The electronic apparatus according to claim 4, further comprising a communication controller circuit designed to establish data communications based on said transmitting element and said receiving element.

6. A controller circuit designed to shift a lens from a lens position within a first movable range to a lens position within a second movable range when a receiving element receives a wave reflecting from an object.

7. A method of switching a focusing mode, comprising:
causing a transmitting element to transmit a wave based on a transmission signal;
detecting a difference between a receiving signal output from a receiving element and the transmission signal; and
switching over the focusing mode between a normal mode and a close-up mode based on the difference.

8. The method according to claim 7, wherein said wave is an infrared.

9. A computer-readable storage medium containing program instructions for switching a focusing mode, comprising:
computer program code causing a processor to cause a transmitting element to transmit a wave based on a transmission signal;
computer program code causing a processor to detect a difference between a receiving signal output from a receiving element and the transmission signal; and
computer program code causing a processor to switch over the focusing mode between a normal mode and a close-up mode based on the difference.
